## Europäisches Patentamt
## European Patent Office
## Office européen des brevets

(19)

(11) Publication number: **0 067 611**

**A1**

(12)

# EUROPEAN PATENT APPLICATION

(21) Application number: **82302822.0**

(22) Date of filing: **02.06.82**

(51) Int. Cl.³: **G 06 F 13/00**

(30) Priority: **05.06.81 CA 379171**

(43) Date of publication of application:
**22.12.82 Bulletin 82/51**

(84) Designated Contracting States:
**AT BE CH DE FR GB IT LI LU NL SE**

(71) Applicant: **Exide Electronics International Corp.**
**2 Penn Center Plaza**
**Philadelphia Pennsylvania 19109(US)**

(72) Inventor: **Smith, James George**
**Rural Route No. 1**
**Laurel Ontario, L0N 1LO(CA)**

(74) Representative: **Greenstreet, Cyril Henry et al,**
**Thames House (Fifth floor) Millbank**
**London SW1P 4QF(GB)**

(54) Method and apparatus for controlling access to computers.

(57) Access to a computer (I) from a remote terminal (II) is controlled by electronic interrogation of the terminal by an access controller (III) interposed between the terminal and the computer which establishes communication between the terminal and the computer only on receipt of a predetermined reply signal from the terminal, and disconnects the terminal from the controller if the reply signal is incorrect or if no reply is received within a predetermined time.

Fig.1

## Method and apparatus for controlling access to computers

This invention relates to the control of access to computers.

In data processing systems it is desirable, and often necessary, to control electronic access to the host computer to ensure privacy of stored information, to reduce the risk of capricious or malicious manipulation, erasure or other damage of stored information, and also to reduce the risk of theft of computing resources and assets, e.g. programs and "computer time". One way of doing this is by means that restrict access to persons who have been provided with security codes or passwords. This however does not control the number of places from which access can be gained, so that it may still be possible to gain access from unauthorised terminals by tapping or dialling into the communications network connected to the computer. Our object in this invention is to provide relatively cheap and simple means of preventing, or at least hindering, such unauthorised access.

We achieve this object by interposing between the host computer and the communications network an access controller that automatically interrogates any terminal that seeks to gain access to the computer and connects the terminal to the computer only on receipt, within a predetermined time, of a predetermined reply signal transmitted automatically by the terminal. The access controller serves, and may be referred to, as a "lock", and has the advantage of being a lock in the negative sense of being a void that does not provide an entry path, and thus is not dependent on maintaining a barrier (which might be breakable).

According to the invention, in a data processing system comprising a host computer and at least one send/receive terminal, an access controller is interposed between the computer and the terminal and normally blocking access from the terminal to the computer; the terminal being provided with means for storing an identification code and transmitting it as a coded reply signal to the access controller in response to a coded enquiry signal from the controller; and the access controller being arranged to transmit the enquiry code to the terminal in response to a message signal addressed to the computer from the terminal, to connect the terminal to the computer only on receipt of the predetermined identification code, and to disconnect the terminal from the controller if the reply signal received from the terminal is incorrect or if no reply signal is received within a predetermined time.

The access controller, situated between the host computer and a host modem for modulating and demodulating signals to and from the computer and the communications network, includes electronically disconnectable means for coupling to the host modem; a memory for storing an enquiry sequence of bits and a reply sequence of bits; means for detecting electronic message signals addressed to the host computer; means for transmitting to the host modem and thence to the terminal a bit sequence duplicating the stored enquiry sequence; means for providing that the next-received signals after transmission of the enquiry sequence be compared with the stored reply sequence; means for issuing a disconnect signal to the host modem; means for issuing an authorised-link-established signal; transfer path means engageable for signal transfer from the host modem-controller junction to the computer input and for signal transfer from the computer output to the host modem-controller junction, said transfer path being biased in the unengaged condition and being switched to the engaged condition only upon issuance of the authorised-link-established signal; means for providing that the disconnect signal issue to the host modem upon expiration of a predetermined wait time period wherein no incoming signal is received following the transmission of the enquiry sequence; means providing that the disconnect signal issue to the host modem when a comparison of said next-received signals with the stored reply bit sequence indicates a discrepancy; and means providing that when this comparison indicates agreement the authorised-link-established signal issues to switch the transfer path to the engaged condition. The memory in the access controller is preferably a read-only memory (ROM).

The response apparatus at each authorised terminal is conveniently an accessor unit, which may be termed a "key" since it operates to open the access controller "lock". Such key units have memory and comparator circuitry for storing and examining security code information and responding to proper inquiries and may be generally similar to the access controller. Advantageously they have read-only-memories (ROM's) as a safeguard against tampering, but if desired Read/Write memories, e.g. EPROM, can be used to enable authorised changes, such as updating, to be effected, e.g. by electronic control from a remote facility such as the host computer.

The invention will now be described in more detail, by way of example, with reference to the accompanying drawings, in which:

Figure 1 is a block diagram of a data processing system incorporating security apparatus of the invention; and

Figure 2 is a schematic circuit diagram of an access controller according to the invention.

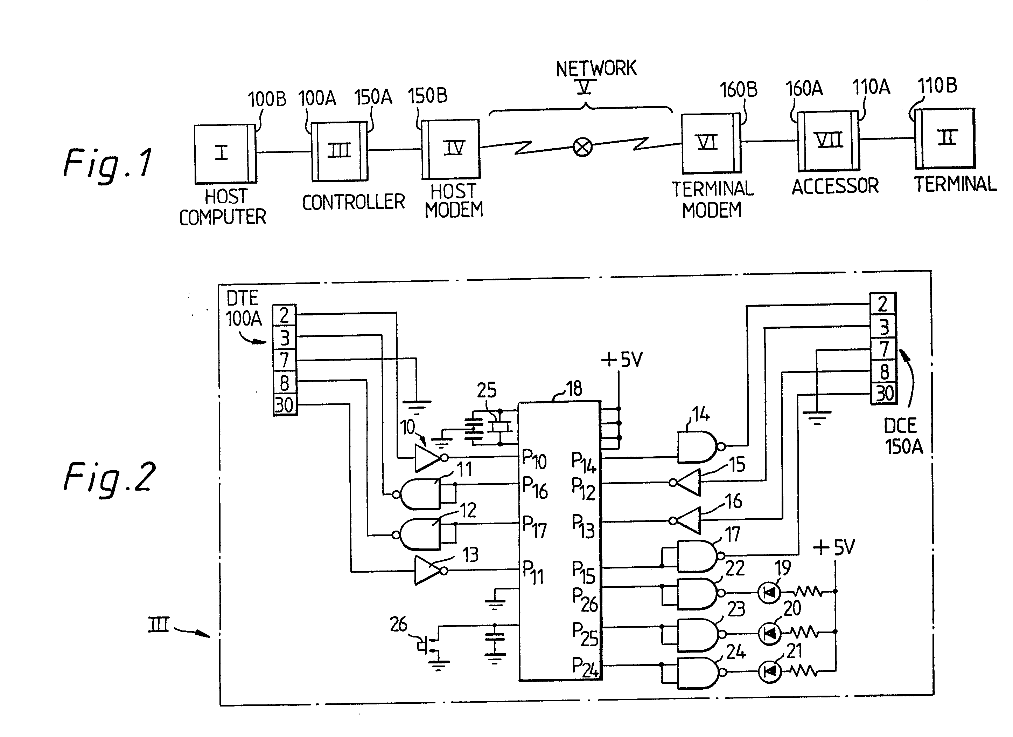

The data processing system shown in Figure 1 provides for telecommunication between a host computer I and a terminal II through an access controller III, a host modem IV, a switched-carrier network V, a terminal modem VI and a terminal accessor VII. The unit III is joined communicatively to the computer I with multiple DTE (data transmitting element) connections 100 A & B, and the unit VII is joined to the terminal II with DTE connectors 110 A & B. The unit III is also joined to the modem IV with multipin DCE (data communication element) connectors 150 A & B, and the unit VII is joined to the modem VI with multipin DCE connectors 160 A & B. Each pair of connectors is joined by a cable. The connectors can be commercially available standard types, e.g. RS-232.

Figure 2 schematically depicts circuitry of the access controller III, with leads to the pins of DCE connector 150A and DTE connector 100A. The signals which are to be used or altered are converted to appropriate representations by level converters 10, 11, 12, 13, 14, 15, 16 and 17 functioning in communication paths to and from a central logic unit (CLU) 18 and connectors 100A and 150A. The CLU 18 contains charge storage (memory) elements (e.g. a metal oxide silicon ROM) in which are placed the representative sequence bit codes that correspond, in analogy, to the notches in a key and the pins in a lock, control circuitry for directing output signals to connectors 100A and 150B, and also auxiliary circuits to visual indicators, e.g. coloured lights 19, 20 and 21, via power buffers 22, 23 and 24. The functions required of the CLU 18 can be performed by a commercially available microcomputer, for example an INTEL 8748 single-chip computer with an oscillator crystal 25 for timing and I/O ports as indicated by P-numbers. The functioning of the controller III can be manually overridden by operation of a reset switch 26, which resets the controller to the normal wait state of holding alert for reception of singals indicating an incoming request for entry into the computer.

In operation, messages dialled or otherwise addressed to the host computer are processed from the carrier network V through the modem IV and transmitted to the access controller III at pin 8 on the DCE connector 150A. Reception at the access controller III of a signal via DCE150A pin 8 through the level converter 16 indicates that a communication link has been established. A host enquiry sequence of bits is then sent from the CLU 18 to DCE150A pin 2 via the level converter 14. This sequence of bits is then transmitted over switched-carrier network V, with modulation and demodulation in modems IV and VI, to the remote terminal II.

After transmitting its enquiry sequence, the circuitry in the CLU 18 switches to the receive state to monitor any incoming signals on DCE150A pin 3 via the level converter 15. Any signals so received are then examined in comparison to the bit sequence stored in the ROM in CLY 18 to verify or deny the correctness of the response bit sequence.

The enquiry bit sequence is coded to elicit a response from the accessor VII but not from any standard terminal apparatus. It should also be sufficiently specialized to avoid triggering responses from any other known apparatus that may be in communication with the network.

By way of example, the bit sequence signals may be in the form of predetermined but not necessarily fixed sequences of high and low voltage values occurring at predetermined but not necessarily fixed time intervals, e.g. sequences having 5 or more highs in the enquiry sequence and 31 or more highs in the response sequence at intervals in the range of from 3.3 to 200 miliseconds. The memory should be capable of storing a preset bit sequence of at least 49 bits.

When a discrepancy occurs between response signals received and the expected response stored in the CLU 18 memory, a disconnect signal is issued by CLU 18 to DCE150A pin 30 via the level converter 17. This disconnect signal shuts-off the modem IV, e.g. by applying a negative voltage to open a relay in the modem, thereby breaking the communications link and denying access to the computer I.

The disconnect signal is also issued to break the communication link if no response is received within a predetermined wait period, e.g. of 0.5 seconds.

If, however, the signal received in response corresponds to the code reply sequence stored in the CLU memory, the CLU 18 issues an "authorised-link-established" signal to DTE100A pin 8 via the level converter 12 and thence to the computer I. Thereafter, all signals received on DCE150A pin 3 are transferred to DTE100A pin 3 and the computer I via the CLU 18 and level converters 15 and 11, and all computer output signals received on DTE100A pin 2 are transferred to DCE150A pin 2 via the CLU 18 and the level converters 10 and 14 and thence to the terminal II. In conjunction with this link establishment, the CLU 18 provides visual indication of the operational status of the access controller by sending signals to the light emitting diodes 19, 20 and 21 via power buffers 22, 23 and 24. Indicators 19, 20 and 21 show colours of red, yellow and green, indicating respectively status conditions of: a) Non-secure; (b) Identity issued; and c) Secure communication in progress.

For communication with the host computer, the remote terminal II is joined to the access control unit (accessor) VII with DTE connectors 110B and 110A having multiple pins numbered as on DTE connectors 100A and 100B. The accessor VII communicates with the network V through the modem VI via DCE connectors 160A and 160B pins with numbers corresponding to pins on
DCE150A and DCE150B.   The remote accessor performs
functions complementary to those of the controller II
and has corresponding components therefor, including
a solid state microcomputer logic part referred to as
CLU-TE (not shown).   After sending a signal addressed
to host computer I, and then upon detecting a signal
on pin 8 of DCE160A, the logic component (CLU-TE) in
the accessor switches into a receive state for monitoring
signals on DCE160A pin 3.   When, and provided that,
the next received signals correspond to the host enquiry
sequence, a duplicate of the stored reply sequence is
sent in response by accessor VII.   Then, as described
in connection with the host controller III, reception
of the proper reply from accessor VII results in
issuance of an authorised-link-established signal to
DTE100A pin 8 at the host site and, consequently, at
both host and terminal sites the logic components switch
so that signals received on DCE pin 3 are transferred
to DTE pin 3 and signals received on DTE pin 2 are
transferred to DCE pin 2, thereby providing two-way
access for terminal and computer.

          Similarly to the host controller, the accessor
has light emitting diodes and power buffers for
providing visual indications of status.

          It will be appreciated that by means of
the invention access to a computer can be restricted to
those terminals having corresponding "key" transmitters.
Hence control of access can be facilitated by physically
guarding against unauthorised operation of these
terminals.   However, when the transfer path has been
engaged by receipt of the key signal sequence, the
"lock" and "key" units pass both control and data
signals between terminal and computer without change,
just as if both devices (lock and key) did not exist.

The conventional system of security passwords for individual operators can of course be employed as an additional safeguard.

## Claims

1.       A data processing system comprising a host computer (I) and at least one send/receive terminal (II), characterised in that an access controller (III) is interposed between the computer and the terminal and normally blocking access from the terminal to the computer; the terminal being provided with a means (VII) for storing an identification code and transmitting it as a coded reply signal to the access controller in response to a coded enquiry signal from the controller; and the access controller being arranged to transmit the enquiry code to the terminal in response to a message signal addressed to the computer from the terminal, to connect the terminal to the computer only on receipt of the predetermined identification code, and to disconnect the terminal from the controller if the reply signal received from the terminal is incorrect or if no reply signal is received within a predetermined time.

2.       A data processing system according to claim 1, in which the enquiry and reply signals are bit sequences of high and low voltage values at predetermined time intervals, the enquiry sequence including at least 5 highs and the reply sequence including at least 31 highs.

3.       A data processing system according to claim 2 in which the highs in the sequences are at intervals of from 3.3 to 200 milliseconds.

4.       An access controller for use in a data processing system according to claim 1, characterised in that it comprises, in combination, electronically disconnectable means for coupling to a modem; a memory for storing an enquiry sequence of bits and a reply sequence of bits; means for detecting electronic message signals addressed by the remote terminal to the host computer; means for transmitting to the modem and thence to the terminal a bit sequence duplicating the stored enquiry sequence; means for providing that the next-received signals after transmission of the enquiry sequence be compared with the stored reply sequence; means for issuing a disconnect signal to the modem; means for issuing an authorised-link-established signal; transfer path means (15, 11) engageable for signal transfer from the modem-controller junction (150) to the computer input and (10, 14) for signal transfer from the computer output to the modem-controller junction (150), said transfer path being biased in the unengaged condition and being switched to the engaged condition only upon issuance of the authorised-link-established signal; means for providing that the disconnect signal issue to the modem upon expiration of a predetermined wait time period wherein no incoming signal is received following the transmission of the enquiry sequence; means providing that the disconnect signal issue to the modem when a comparison of said next-received signals with the stored reply bit sequence indicates a discrepancy; and means providing that when this comparison indicates agreement   the authorised-link-established signal issues to switch the transfer path to the engaged condition.

5.      An access controller according to claim 4 in which the memory is a read-only memory.

6.      An access controller according to claim 4 or claim 5 which includes a single-chip microcomputer (18) for storing and comparing the enquiry and reply codes and issuing enquiry, connect and disconnect signals.

Fig.1

Fig.2

European Patent
Office

**EUROPEAN SEARCH REPORT**

Application number

EP 82 30 2822

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 735 106 (IBM) <br> * column 1, lines 7-11, 38-41; column 2, lines 32-53; column 6, lines 57-60; figure 1 * <br> --- | 1 | G 06 F 13/00 |
| Y | GB-A-2 019 060 (PITNEY BOWES) <br><br> * page 1, lines 39-46, 76-89; page 2, lines 10-15, 52-55, 99-112; figure 1 * <br> --- | 1,2,4-6 | |
| Y | IBM TECHNICAL DISCLOSURE BULLETIN, vol.16, no.7, December 1973, New York (US) <br> G.F. NIELSEN: "Remote terminal - computer communication security system", pages 2312-2314 * page 2312, lines 8-11, figure; page 2313, lines 24-46 * <br> ----- | 1,4,5 | |
| | | | TECHNICAL FIELDS SEARCHED (Int. Cl. ³) <br><br> G 06 F 13/00 |

The present search report has been drawn up for all claims

| Place of search | Date of completion of the search | Examiner |
|---|---|---|
| THE HAGUE | 08-09-1982 | DHEERE R.F.B.M. |